# EUROPÄISCHE PATENTSCHRIFT

(11) **EP 2 082 387 B1**
(45) Veröffentlichungstag und Bekanntmachung des Hinweises auf die Patenterteilung: **21.04.2010**
(21) Anmeldenummer: 07803202.6
(22) Anmeldetag: 04.09.2007
(51) Int. Cl.: G08G 1/16

(54) **VERFAHREN ZUM BILDLICHEN DARSTELLEN EINER GEFAHR FÜR DEN FAHRER EINES KRAFTFAHRZEUGS**
METHOD FOR GRAPHICALLY REPRESENTING A DANGER FOR THE DRIVER OF A MOTOR VEHICLE
PROCÉDÉ DE SIGNALISATION VISUELLE D'UN RISQUE POUR LE CONDUCTEUR D'UN VÉHICULE AUTOMOBILE

(30) Priorität: 19.10.2006 DE 102006049249
(43) Veröffentlichungstag der Anmeldung: 29.07.2009
(73) Patentinhaber: Robert Bosch GmbH, 70442 Stuttgart (DE)
(72) Erfinder: SCHICK, Jens, 71083 Herrenberg (DE)
(86) Internationale Anmeldenummer: PCT/EP2007/059237
(87) Internationale Veröffentlichungsnummer: WO 2008/046687

(56) Entgegenhaltungen:
- WO-A-2006/076903
- DE-A1- 10 249 003

## Beschreibung

Die Erfindung betrifft ein Verfahren zum Informieren des Fahrers eines Kraftfahrzeugs unter Verwendung eines Fahrerinformationssystems, das mindestens eine Erfassungseinheit, mindestens eine Auswerteeinheit und mindestens eine optische Darstellungseinheit aufweist.

### Stand der Technik

Verfahren der eingangs genannten Art sind aus dem Stand der Technik bekannt. Sie dienen unter anderem dazu, den Fahrer eines Kraftfahrzeugs auf möglich Gefahren während des Fahrbetriebs aufmerksam zu machen. Dabei werden die Umgebung des Kraftfahrzeugs beschreibende Daten von einer Erfassungseinheit, die beispielsweise Radar- und/oder Lasersensoren aufweist, erfasst, von einer Auswerteeinheit bewertet und von einer optischen Darstellungseinheit dem Fahrer angezeigt. Wobei die Darstellungseinheit beispielsweise ein Display im Armaturenbereich des Kraftfahrzeugs oder ein Head-Up-Display sein kann, welches eine Anzeige an die Windschutzscheibe des Kraftfahrzeugs projiziert.

Aus den Druckschriften DE 102 47 563 A1 und DE 10 2004 014 671 A1 sind Verfahren bekannt, bei denen durch zusätzliche Symbole auf Gefahren hingewiesen wird. So wird zum Beispiel ein sich von der Seite näherndes Kraftfahrzeug im Head-Up-Display farblich hervorgehoben.

Aus der DE 10 2004 001 113 A1 ist ein Verfahren bekannt, bei dem aufgrund der erfassten Daten dem Fahrer eine Ausweichhandlung, beispielsweise als Pfeil, im Head-Up-Display dargestellt wird.

Ein ähnliches Verfahren mit einer Information zur Gefahren-Vermeidung ist aus der DE 10249003 A1 bekannt.

Aus der EP 1 355 285 A1 ist ein Verfahren zum Informieren des Fahrers eines Kraftfahrzeugs bekannt, bei dem eine Aufsicht auf das eigene Fahrzeug mit seiner unmittelbaren Umgebung dargestellt wird, und optional ein Pfeil die Bewegungsrichtung des eigenen Kraftfahrzeugs anzeigt, wobei hier dem Fahrer keine Hinweise auf eine Gefährdung gegeben werden.

### Offenbarung der Erfindung

Erfindungsgemäß ist vorgesehen, dass die Darstellungseinheit, das das Fahrerinformationssystem aufweisende Kraftfahrzeug darstellt und im Falle einer von der Auswerteeinheit aufgrund der Bewertung von Daten der Erfassungseinheit festgestellten Nicht-Gefährdung mit einer Aura-Darstellung umgibt, und dass im Falle einer, auf entsprechende Weise festgestellten, Gefährdung die Aura verändert wird oder verschwindet und dem Fahrer mindestens eine Zusatzinformationen zur Gefahren-Vermeidung angezeigt wird. Für den Fall also, dass die Auswerteeinheit mittels der von der Erfassungseinheit erfassten Daten die aktuelle Fahrsituation so bewertet, dass keine Gefahr für das Kraftfahrzeug besteht, stellt die Darstellungseinheit das Kraftfahrzeug von einer Aura-Darstellung umgeben dar. Die Aura-Darstellung ist dabei als ein das Kraftfahrzeug umgebender Strahlenkranz oder als ein das Kraftfahrzeug umgebendes Farbfeld zu verstehen, dessen Transparenz beispielsweise nach außen hin zunimmt. Die Aura-Darstellung ist dabei vorteilhafterweise so gefärbt, dass der Fahrer des Kraftfahrzeugs auch aus dem Augenwinkel leicht wahrnehmen kann, dass keine Gefahr besteht. Wird jedoch eine Gefahr erfasst, so verschwindet die Aura und/oder verändert sich und/oder dimmt vorteilhafterweise weg und es wird eine Zusatzinformation zur Gefahrenvermeidung angezeigt. Wobei das Verändern der Aura nicht nur eine farbliche Veränderung sondern auch eine Veränderung der Form der Aura bedeuten kann. Das Verschwinden der Aura-Darstellung wird von dem Fahrer leicht registriert und lenkt seine Aufmerksamkeit auf die Darstellungseinheit. Die Zusatzinformation zur Gefahren-Vermeidung gibt dem Fahrer schnell Aufschluss über zur Gefahrenvermeidung einzuleitende Schritte. Durch die Zusatzinformationen muss sich der Fahrer keine Gedanken über die Bewertung der aktuellen Fahrersituation machen, also nicht zunächst die angezeigte Darstellung auswerten und anschließend eine Entscheidung zur Gefahren-Vermeidung zu treffen. Das erfindungsgemäße Verfahren ermöglicht es, dass der Fahrer keine Zeit verliert, da ihm die Zusatzinformationen zur Gefahren-Vermeidung bereits angezeigt werden.

Vorteilhafterweise wird als Zusatzinformation der Bereich des dargestellten Fahrzeugs optisch gekennzeichnet, der gefährdet ist. Fährt der Fahrer beispielsweise zu dicht auf ein vorausfahrendes Fahrzeug auf, so wird der Frontbereich des dargestellten Kraftfahrzeugs mit einer Warn-Farbe, wie zum Beispiel rot eingefärbt, wobei sich die Einfärbung auch mit zunehmender Gefahr verändern kann, sodass der Frontbereich zunächst mit einer Hinweis-Farbe, wie zum Beispiel gelb, gekennzeichnet wird und mit zunehmender Gefahr sich die Einfärbung zu der Warn-Farbe ändert. Gleiches gilt beispielsweise für eine Situation, in der der Fahrer das Kraftfahrzeug zu nah an einen Bordstein, einer Hauswand oder ein neben ihm fahrendes Kraftfahrzeug steuert. Der Fahrer erkennt durch die Einfärbung schnell den gefährdeten Bereich seines Kraftfahrzeugs und kann dementsprechend handeln. Natürlich muss die optische Kennzeichnung des gefährdeten Bereichs nicht ausschließlich durch eine Einfärbung erstellt werden, sondern kann auch durch beispielsweise ein Umranden des gefährdeten Bereichs oder durch ein Vermindern der Farbintensität des übrigen dargestellten Kraftfahrzeugs geschehen.

Nach einer Weiterbildung der Erfindung wird als Zusatzinformation dem Fahrer eine mit der Darstellung des Kraftfahrzeugs verknüpfte Anweisung zur Fahrzeugführung angezeigt. Das bedeutet, dass in Abhängigkeit der Darstellung des Kraftfahrzeugs, sei es aus der Vogelperspektive, von der Seite oder Dergleichen, eine Anweisung zur Fahrzeugführung angezeigt wird, sodass der Fahrer mit einem Blick erkennen kann, wie er das Fahrzeug zu führen hat, um die Gefahr zu vermeiden. Durch das erfindungsgemäße Verfahren wird dem Fahrer nicht nur eine Bewertung der Situation, sondern auch eine Reaktion angezeigt.

Vorteilhafterweise wird der dargestellte gefährdete Bereich des Kraftfahrzeugs aus einer Gefährdung durch andere Objekte oder einer Gefährdung aufgrund eigener Fahrmanöver angezeigt. Dem Fahrer wird also der gefährdete Bereich des eigenen Kraftfahrzeugs angezeigt, der beispielsweise durch ein sich näherndes anderes Kraftfahrzeug (im Folgenden Fremdfahrzeug) und/oder aufgrund eines eigenen Fahrmanövers, wie beispielsweise ein zu schnelles Fahren in die oder der Kurve oder ein zu dichtes Auffahren auf den Vordermann, gefährdet ist.

Zweckmäßigerweise ist die Zusatzinformation ein vorgeschlagenes eigenes Fahrmanöver und/oder eine vorgeschlagene Vorbereitung zu einem durchzuführenden eigenen Fahrmanöver. So kann dem Fahrer nicht nur ein durchzuführendes Manöver, wie beispielsweise Bremsen, Beschleunigen oder Lenkern, durch die Darstellungseinheit vorgeschlagen werden, sondern es kann auch zusätzlich oder alternativ eine Vorbereitung für ein durchzuführendes Manöver, wie beispielsweise das Betätigen des Blinkers, der Hupe, das Wechseln eines Ganges oder Ähnliches, vorgeschlagen werden. Der Fahrer kann somit noch schneller auf eine gegebene Fahrsituation reagieren.

Vorteilhafterweise wird das vorgeschlagene Fahrmanöver durch mindestens einen, vom dargestellten Kraftfahrzeug ausgehenden Pfeil angezeigt. Durch diese Verknüpfung der Anweisung zur Fahrzeugführung mit der Darstellung des Kraftfahrzeugs wird dem Fahrer einfach und unmissverständlich ein vorgeschlagenes Fahrmanöver angezeigt. Der Fahrer muss keine Zeit durch eine Interpretation der Darstellung verlieren, sondern kann sofort handeln.

Nach einer Weiterbildung der Erfindung zeigt die Darstellungseinheit mindestens eine zusätzliche Zustandsinformation des Kraftfahrzeugs an. Die Zustandsinformation betrifft beispielsweise ob und welche Tür des Kraftfahrzeugs geöffnet oder geschlossen ist, ob ein Fenster geöffnet ist, ob die Türen verschlossen sind, ob nur das Parklicht oder auch das Fahrlicht eingeschaltet ist und/oder ob der Kofferraum und/oder die Motorhaube geschlossen sind.

Das erfindungsgemäße Verfahren ermöglicht eine übersichtliche Darstellung der Fahrsituation, wobei dem Fahrer nicht nur die Gefährdung sondern auch ein Vorschlag für eine mögliche Reaktion angezeigt wird, sodass dieser augenblicklich handeln kann.

### Kurze Beschreibung der Zeichnungen

Im Folgenden soll die Erfindung anhand einiger Figuren näher erläutert werden. Dazu zeigen im Folgenden
- Figur 1: ein erstes Ausführungsbeispiel des erfindungsgemäßen Verfahrens bei einer Nicht-Gefährdung,
- Figuren 2a und 2b: ein zweites Ausführungsbeispiel bei einer Gefährdung im Frontbereich,
- Figuren 3a und 3b: ein drittes Ausführungsbeispiel bei einer Gefährdung im Heckbereich,
- Figuren 4a und 4b: ein viertes Ausführungsbeispiel bei einer Gefährdung im Seitenbereich,
- Figuren 5a und 5b: ein fünftes Ausführungsbeispiel bei einer Gefährdung durch ein überholendes Fahrzeug,
- Figuren 6a und 6b: ein sechstes Ausführungsbeispiel bei einer Gefahr durch ein Hindernis,
- Figuren 7a bis 7c: ein siebtes Ausführungsbeispiel bei einer Gefahr durch überhöhte Geschwindigkeit,
- Figuren 8a bis 8d: ein achtes Ausführungsbeispiel bei einer Gefahr durch ein überraschendes Hindernis und
- Figur 9: ein Ausführungsbeispiel der Anordnung der Darstellungseinheit.

### Ausführungsform(en) der Erfindung

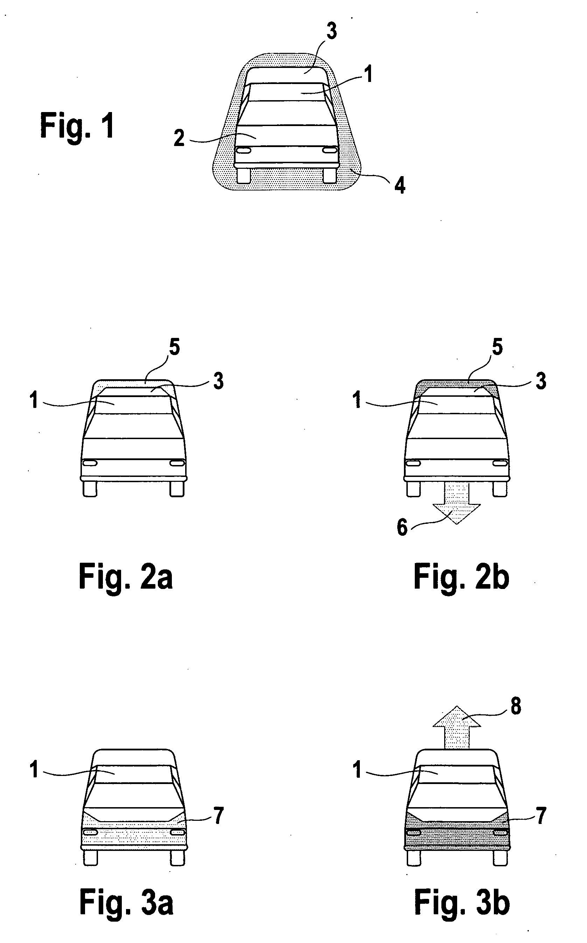

Die Figuren 1 bis 8d zeigen ein von einer Darstellungseinheit eines Fahrerinformationssystems dargestelltes Kraftfahrzeug 1 in einer Schräg-Aufsicht von hinten, sodass der Heckbereich 2 des Kraftfahrzeugs 1 vollständig und der Frontbereich 3 zumindest teilweise dargestellt ist.

Die Figur 1 zeigt das Kraftfahrzeug 1 mit einer das Kraftfahrzeug umgebenden Aura-Darstellung 4. Die Aura-Darstellung 4 ist vorteilhafterweise anders gefärbt als das dargestellte Kraftfahrzeug 1, sodass ein deutlicher Unterschied zu erkennen ist. Die Figur 1 zeigt die Darstellung der Darstellungseinheit, für den Fall, dass von einer Erfassungseinheit erfasste und von einer Auswerteeinheit ausgewertete Daten auf keine Gefährdung des eigenen Kraftfahrzeugs hinweisen. Die Erfassungseinheit und die Auswerteeinheit sind dabei ebenfalls Teil des Fahrerinformationssystems.

Die Figuren 2a und 2b zeigen in einem Ausführungsbeispiel das Kraftfahrzeug 1 bei einer Gefahr im Frontbereich 3. Ist zum Beispiel der Abstand zu einem vorausfahrenden Fahrzeug zu gering, oder erkennt das Fahrerinformationssystem ein stehendes anderes Kraftfahrzeug (im Folgenden Fremdfahrzeug) vor dem eigenen Kraftfahrzeug, so wird als Zusatzinformation der gefährdete Bereich des Kraftfahrzeugs 1, welcher in diesem Fall dem Frontbereich 3 entspricht, vorteilhaft optisch gekennzeichnet. Beispielsweise wird dazu, wie hier dargestellt, ein Teilfrontbereich 5 farbig markiert, sodass der Fahrer erkennt welcher Bereich seines Kraftfahrzeugs gefährdet ist. In der Figur 2a ist der Teilfrontbereich 5 beispielsweise durch eine Hinweisfarbe, wie zum Beispiel gelb, gekennzeichnet, da die Gefahr durch das vorausfahrende oder stehende Fremdfahrzeug, noch leicht vermieden werden kann. In der Figur 2b ist der Teilfrontbereich 5 durch eine Warn-Farbe, beispielsweise rot, markiert, wodurch angezeigt wird, dass die Gefahr akut ist und dringend eine Reaktion von dem Fahrer gefordert ist, um die Gefahr zu vermeiden. Vorteilhafterweise wird dabei eine weitere Zusatzinformation in Form eines Pfeils 6 angezeigt, der in Fahrtrichtung des dargestellten Kraftfahrzeugs 1 nach hinten weist und dadurch als Fahrmanöver für den Fahrer ein Bremsen vorschlägt.

Die Aura-Darstellung 4 aus der Figur 1 ist in den Figuren 2a bis 8d nicht mehr vorhanden, da in den in diesen Figuren dargestellten Situationen jeweils eine Gefahr erkannt wurde. Durch das Verschwinden oder Wegdimmen der Aura-Darstellung 4, wird der Fahrer leicht darauf aufmerksam gemacht, dass eine Gefährdung seines Kraftfahrzeugs besteht. Durch die Zusatzinformationen, der verfärbte Teilfrontbereich 5 und der Pfeil 6, wird dem Fahrer nicht nur angezeigt, welcher Bereich seines Kraftfahrzeugs gefährdet ist, sondern auch wie er handeln sollte, um der Gefahr zu entgehen.

Die Figuren 3a und 3b zeigen in einem weiteren Ausführungsbeispiel das von der Darstellungseinheit dargestellte Kraftfahrzeug 1 für den Fall, dass ein Kraftfahrzeug, welches hinter dem betrachteten Kraftfahrzeug fährt, zu dicht auffährt (Figur 3a) oder so schnell fährt, dass ein Auffahrunfall von hinten droht (Figur 3b). Für den Fall, dass der Hintermann lediglich zu dicht auffährt, ist ein Teilheckbereich 7 des Kraftfahrzeugs 1 mit der Hinweis-Farbe farblich gekennzeichnet, und für den Fall, dass ein Auffahrunfall droht, wie in der Figur 3b dargestellt, mit der Warn-Farbe gekennzeichnet. Zusätzlich zu der Farbkennzeichnung ist für den Fall eines drohenden Auffahrunfalls von hinten ein Pfeil 8 dargestellt, der von dem Kraftfahrzeug 1 aus gesehen nach vorne zeigt, wodurch dem Fahrer eine Reaktion zur Vermeidung der Gefahr, nämlich ein Beschleunigen, vorgeschlagen wird.

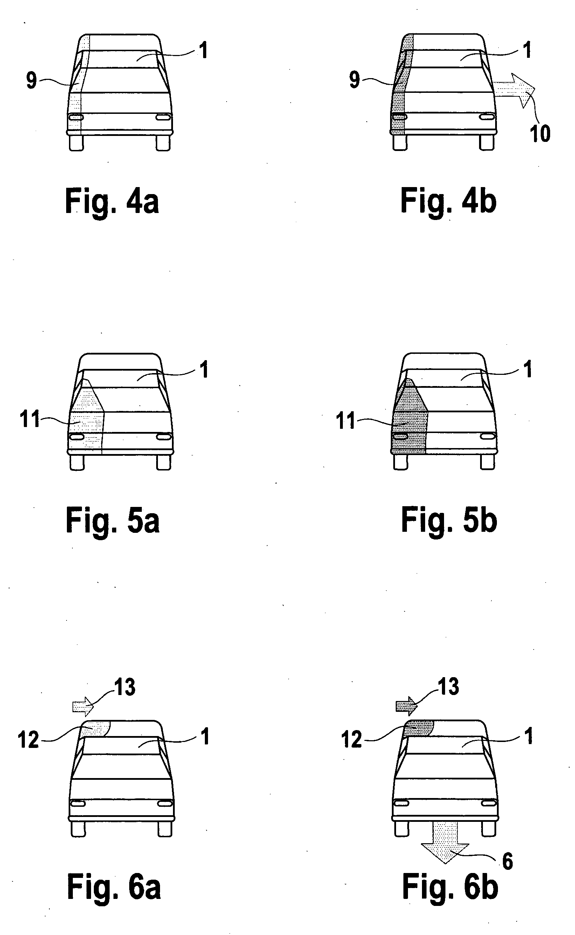

Die Figuren 4a und 4b zeigen in einem Ausführungsbeispiel das dargestellte Kraftfahrzeug 1 für den Fall, dass eine Gefährdung von der Seite droht. Dies kann beispielsweise ein neben dem eigenen Kraftfahrzeug fahrendes Fremdfahrzeug sein. Für den Fall dass sich das Fremdfahrzeug langsam nähert, und die Gefahr leicht vermieden werden kann, ist der linke Seitenbereich 9 des Kraftfahrzeugs 1 mit der Hinweisfarbe gekennzeichnet, wie in der Figur 4a dargestellt. Die Figur 4b zeigt die Kennzeichnung des Seitenbereichs 9 für den Fall, dass sich das Fremdfahrzeug schnell von der Seite näher und der Fahrer dringend reagieren muss, um die Gefahr zu vermeiden. Dabei ist der Seitenbereich 9, wie oben beschrieben, durch Warn-Farbe, gekennzeichnet, zusätzlich ist ein Pfeil 10 dargestellt, der von dem dargestellten Kraftfahrzeug 1 aus nach rechts zeigt, und somit dem Fahrer die Richtung anzeigt, in die er lenken muss, um der Gefahr zu entgehen. Sowohl hier als auch in den anderen Beispielen werden die Pfeile 6,10 vorteilhafterweise mit zunehmender Gefahr größer dargestellt werden.

Der Seitenbereich 9 des Kraftfahrzeugs 1 wird ebenfalls mit der Hinweisfarbe oder der Warnfarbe entsprechend gekennzeichnet, wenn sich das eigene Kraftfahrzeug in einer Kurve befindet und die Geschwindigkeit überhöht ist. Wobei der linke Seitenbereich 9 gekennzeichnet wird, wenn sich das eigene Kraftfahrzeug in einer Rechtskurve befindet.

Die Figuren 5a und 5b zeigen das Kraftfahrzeug 1 mit einer optischen Kennzeichnung, für den Fall, dass die Erfassungseinheit beziehungsweise die Auswerteeinheit ein von hinten überholendes Fremdfahrzeug erkannt hat. Registriert das Fahrerinformationssystem, dass der Fahrer des eigenen Kraftfahrzeugs nicht vor hat seine Spur zu wechseln, so wird wie in der Figur 5a der linke hintere Eckbereich 11, für den Fall dass das Fremdfahrzeug links überholt, optisch durch eine Farbgebung mit der Hinweis-Farbe markiert. Hat das Fahrerinformationssystem registriert, dass der Fahrer des dargestellten Kraftfahrzeugs 1 selber eine Spur nach links wechseln möchte, so wird der Eckbereich 11 durch die Warn-Farbe gekennzeichnet. In beiden Fällen wird der Fahrer, auch wenn sich das Fremdfahrzeug im toten Winkel seines Kraftfahrzeugs befindet, auf das Fremdfahrzeug und eine mögliche Gefahr aufmerksam gemacht.

Die Figuren 6a und 6b zeigen das Kraftfahrzeug 1 in einer Situation, in der -in Fahrtrichtung gesehen- vorne links ein überraschendes Hindernis erkannt wurde. Der Fahrer wird hierbei durch eine farbliche Kennzeichnung des linken vorderen Eckbereichs 12 und einen zusätzlichen, nach rechts weisenden Pfeil 13 auf das Hindernis aufmerksam gemacht und zum Nachrechtslenken aufgefordert. Dabei wird in diesem Ausführungsbeispiel wiederum unterschieden zwischen einem Hinweis auf das Hindernis (Figur 6a) und einer Warnung auf eine akute Gefahr durch das Hindernis (Figur 6b), wobei im letzteren Fall der Eckbereich 12 und der Pfeil 13 mit der Warn-Farbe gekennzeichnet ist. Zusätzlich ist für den Fall einer akuten Gefahr der Pfeil 6 dargestellt, der dem Fahrer des Kraftfahrzeugs ein Bremsen signalisiert beziehungsweise vorschlägt, um die Gefahr zu vermeiden.

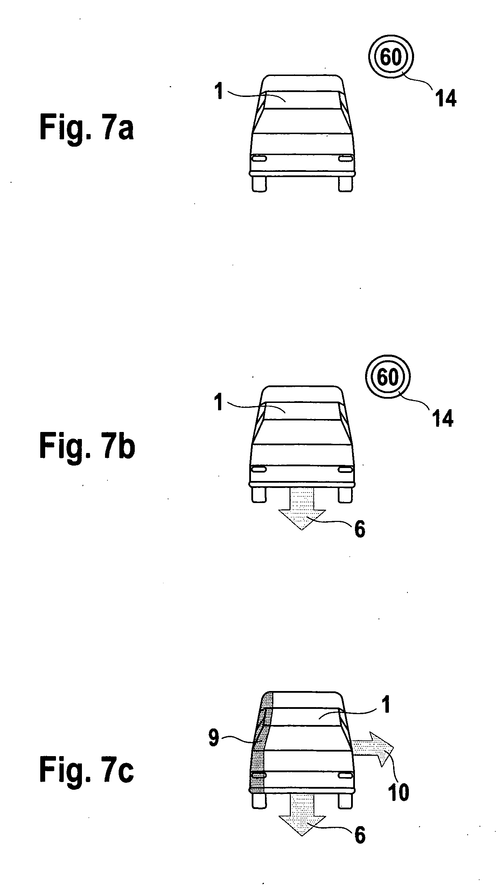

Die Figuren 7a bis 7c zeigen die Darstellung des Kraftfahrzeugs 1 bei überhöhter Geschwindigkeit des eigenen Kraftfahrzeugs. In einer ersten Stufe (Figur 7a) wird dem Fahrer zunächst ein Warnzeichen in Form eines Verkehrsschildes 14 angezeigt, welches ihn auf die erlaubte Höchstgeschwindigkeit aufmerksam macht. Ist das Fahrerinformationssystem beziehungsweise die Erfassungseinheit fähig, Verkehrszeichen zu erkennen, so kann das Verkehrsschild 14 dementsprechend dargestellt werden. Ansonsten stellt das Verkehrsschild 14 lediglich ein Warnsymbol dar, welches darauf aufmerksam macht, dass die Geschwindigkeit des eigenen Kraftfahrzeugs allgemein zu hoch beziehungsweise für die aktuelle Fahrtsituation zu hoch ist. Ist die Geschwindigkeit viel zu hoch gewählt, so wird durch den zusätzlichen Pfeil 6 der Fahrer zum Bremsen aufgefordert (Figur 7b). Erkennt das Fahrerinformationssystem, dass sich das Fahrzeug in einer Kurve befindet, wie in der Figur 7c dargestellt in einer Rechtskurve, und erkennt es weiterhin dass für diese Kurve die Geschwindigkeit zu hoch gewählt ist, so wird wie in der Figur 4a der linke Seitenbereich 9 mit der Warn-Farbe farblich markiert und zusätzlich werden der Pfeil 6 als Bremsaufforderung beziehungsweise Bremsvorschlag zur Vermeidung einer Gefahr und der Pfeil 10 als Hinweis zum Lenken angezeigt. Mit einem Blick auf das dargestellte Kraftfahrzeug 1, wie es in der Figur 7c dargestellt ist, weiß der Fahrer nicht nur, dass eine Gefahr droht, sondern er weiß auch, wie er reagieren muss, nämlich Bremsen und nach recht Lenken, um die Gefahr zu vermeiden.

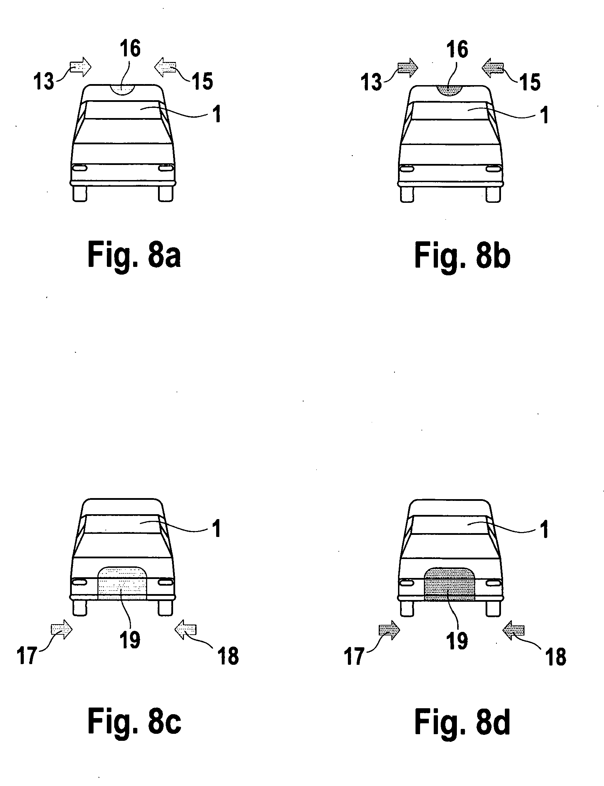

Die Figuren 8a bis 8d zeigen beispielhafte Darstellungsmöglichkeiten der Darstellungseinheit für den Fall, dass die Fahrbahn, auf der sich das eigene Kraftfahrzeug befindet, vor dem eigenen Kraftfahrzeug (Figuren 8a und 8b) oder hinter dem eigenen Kraftfahrzeug (Figuren 8c und 8d) nicht frei ist. Dazu werden im ersten Fall vor dem dargestellten Kraftfahrzeug 1 zwei aufeinander weisende Pfeile 13 und 15 angezeigt, die entsprechend der Gefahrenstufe mit der Hinweisfarbe oder der Warnfarbe gekennzeichnet sind. Zusätzlich ist der mittlere Frontbereich 16 des Kraftfahrzeugs 1 in der entsprechenden Farbe markiert. Für die Figuren 8c und 8d gilt entsprechendes, wobei jeweils zwei aufeinander weisende Pfeile 17 und 18 hinter dem Kraftfahrzeug 1 in entsprechender Farbe angezeigt werden. Zusätzlich wird hier der mittlere Heckbereich 19 mit der Hinweis- oder der Warn-Farbe gekennzeichnet. Dabei muss die Farbgebung der Pfeile 13, 15, 17 und 18 und des mittleren Frontbereichs 16 und des mittleren Heckbereichs 19 nicht unbedingt von der Geschwindigkeit des eigenen Kraftfahrzeugs oder eines Fremdfahrzeugs abhängig sein. Beispielsweise werden diese Zusatzinfonnationen auch im Stand des eigenen Kraftfahrzeugs angezeigt, wobei sich die Farbgebung darin unterscheidet, ob ein Gang eingelegt oder nicht eingelegt ist, sodass der Fahrer gegebenenfalls darauf aufmerksam gemacht wird, beispielsweise im Stau, in den Leerlauf zu schalten.

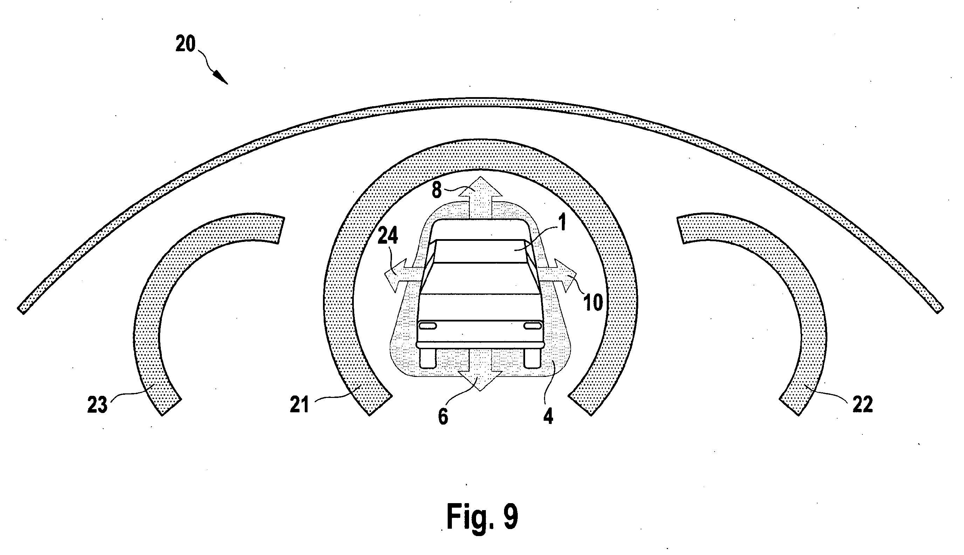

Die Figur 9 zeigt in einem Ausführungsbeispiel eine schematische Anordnung der Darstellungseinheit im Armaturenbereich 20 des eigenen Kraftfahrzeugs. Hierbei ist diese mittig in einer Geschwindigkeitsanzeige 21, zwischen einem Drehzahlmesser 22 und einer Tankfüllstandanzeige 23 angeordnet. In dem hier dargestellten Beispiel ist das Kraftfahrzeug 1 mitsamt der Aura-Darstellung 4, den Pfeilen 6, 8 und 10, und einem dem Pfeil 10 entgegengesetzten Pfeil 24 dargestellt. Im Betrieb werden diese natürlich nicht alle auf einmal angezeigt. Sobald eine Gefahr erkannt wurde, verschwindet zunächst die Aura-Darstellung 4, wodurch der Fahrer des Kraftfahrzeugs als erstes auf eine Gefahr aufmerksam gemacht wird und anschließend mittels der Zusatzinformationen einen Vorschlag zur Gefahren-Vermeidung erhält.

## Patentansprüche

1. Verfahren zum Informieren des Fahrers eines Kraftfahrzeugs unter Verwendung eines Fahrerinformationssystems, das mindestens eine Erfassungseinheit, mindestens eine Auswerteeinheit und mindestens eine optische Darstellungseinheit aufweist, **dadurch gekennzeichnet, dass** die Darstellungseinheit das das Fahrerinfonnationssystem aufweisende Kraftfahrzeug darstellt und im Falle einer von der Auswerteeinheit aufgrund der Bewertung von Daten der Erfassungseinheit festgestellten Nicht-Gefährdung mit einer Aura-Darstellung umgibt, und dass im Falle einer auf entsprechende Weise festgestellten Gefährdung die Aura-Darstellung verändert wird oder verschwindet und mindestens eine Zusatzinformation zur Gefahren-Vermeidung angezeigt wird.

2. Verfahren nach Anspruch 1, **dadurch gekennzeichnet, dass** als Zusatzinformation der Bereich des dargestellten Fahrzeugs optisch **gekennzeichnet** wird, der gefährdet ist.

3. Verfahren nach einem der vorhergehenden Ansprüche, **dadurch gekennzeichnet, dass** als Zusatzinformation dem Fahrer eine mit der Darstellung des Kraftfahrzeugs verknüpfte Anweisung zur Fahrzeugführung angezeigt wird.

4. Verfahren nach einem der vorhergehenden Ansprüche, **dadurch gekennzeichnet, dass** der dargestellte gefährdete Bereich des Kraftfahrzeugs aus einer Gefährdung durch andere Objekte und/oder einer Gefährdung aufgrund eigener Fahrmanöver angezeigt wird.

5. Verfahren nach einem der vorhergehenden Ansprüche, **dadurch gekennzeichnet, dass** die Zusatzinformation ein vorgeschlagenes eigenes Fahrmanöver und/oder eine vorgeschlagene Vorbereitung zu einem durchzuführenden eigenen Fahrmanöver ist.

6. Verfahren nach einem der vorhergehenden Ansprüche, **dadurch gekennzeichnet, dass** das vorgeschlagene Fahrmanöver durch mindestens einen, vom dargestellten Kraftfahrzeug ausgehenden Pfeil angezeigt wird.

7. Verfahren nach einem der vorhergehenden Ansprüche, **dadurch gekennzeichnet, dass** die Darstellungseinheit mindestens eine zusätzliche Zustandsinformation des Kraftfahrzeugs anzeigt.

## Claims

1. Method for informing the driver of a motor vehicle using a driver information system which has at least one sensing unit, at least one evaluation unit and at least one visual display unit, **characterized in that** the display unit represents the motor vehicle having the driver information system, and if there is an absence of hazards, detected by the evaluation unit on the basis of the evaluation of data of the sensing unit, it surrounds said motor vehicle representation with an aura representation, and **in that** if a hazard is detected in a corresponding way the aura representation is changed or disappears and at least one additional information item for the avoidance of danger is displayed.

2. Method according to Claim 1, **characterized in that** the area of the represented vehicle which is subject to danger is indicated visually as additional information.

3. Method according to one of the preceding claims, **characterized in that** an instruction which is linked to the representation of the motor vehicle and has the purpose of guiding the vehicle is displayed to the driver as additional information.

4. Method according to one of the preceding claims, **characterized in that** the represented area of the motor vehicle which is subject to danger arising from a hazard presented by other objects and/or a hazard owing to driving manoeuvres by the vehicle in question is indicated.

5. Method according to one of the preceding claims, **characterized in that** the additional information is a proposed driving manoeuvre by the vehicle in question and/or a proposed preparation for a driving manoeuvre which is to be carried out by the vehicle in question.

6. Method according to one of the preceding claims, **characterized in that** the proposed driving manoeuvre is indicated by at least one arrow which starts from the represented motor vehicle.

7. Method according to one of the preceding claims, **characterized in that** the display unit displays at least one additional status information item of the motor vehicle.

## Revendications

1. Procédé d'information du conducteur d'un véhicule automobile par recours à un système d'information du conducteur qui présente au moins une unité de détection, au moins une unité d'évaluation et au moins une unité de présentation visuelle,
**caractérisé en ce que**
l'unité de présentation représente le véhicule automobile doté du système d'information du conducteur et l'entoure d'une auréole au cas où, sur base de l'évaluation des données de l'unité de détection, l'unité d'évaluation constate l'absence de danger,
**en ce qu'**elle modifie la représentation de l'auréole ou la supprime au cas où elle constate de manière appropriée qu'il existe un danger et
**en ce qu'**elle affiche au moins une information supplémentaire qui permet d'éviter le danger.

2. Procédé selon la revendication 1, **caractérisé en ce que** l'information supplémentaire est la désignation visuelle de la partie en danger du véhicule représenté.

3. Procédé selon l'une des revendications précédentes, **caractérisé en ce que** l'information supplémentaire est une indication de conduite du véhicule présentée au conducteur conjointement à la représentation du véhicule automobile.

4. Procédé selon l'une des revendications précédentes, **caractérisé en ce qu'**il affiche la partie du véhicule automobile qui est mise en danger par d'autres objets et/ou suite aux propres manoeuvres de conduite.

5. Procédé selon l'une des revendications précédentes, **caractérisé en ce que** l'information supplémentaire est une proposition de manoeuvre de conduite propre et/ou une proposition de préparation d'une manoeuvre de conduite propre à exécuter.

6. Procédé selon l'une des revendications précédentes, **caractérisé en ce que** la proposition de manoeuvre de conduite est affichée par au moins une flèche qui part du véhicule automobile représenté.

7. Procédé selon l'une des revendications précédentes, **caractérisé en ce que** l'unité de présentation affiche au moins une information supplémentaire sur l'état du véhicule automobile.
